# EUROPEAN PATENT APPLICATION

(11) **EP 2 025 531 A1**
(43) Date of publication of application: **18.02.2009**
(21) Application number: 07253192.4
(22) Date of filing: 14.08.2007
(51) Int. Cl.: B42F 13/40

(54) **A paper-retaining device**

(71) Applicant: Lion Share, New Territorries, Hong Kong (CN)
(72) Inventor: Lam, Kin Chung, New Territories, Hong Kong (CN); To, Kwong Yip, New Territories, Hong Kong (CN); To, Yat Hang, New Territories, Hong Kong (CN)
(74) Representative: Howe, Steven

(57) **Abstract**

A paper-retaining device (100, 200, 300) is disclosed as including a substrate (102, 202, 302), a lever-arch type file mechanism (110, 210) fixedly engaged with the substrate for releasably retaining pieces of paper, and a universal serial bus (USB) memory device (120, 220) fixedly engaged with the substrate.

## Description

This invention relates to a paper-retaining device and, in particular, such a device adapted to releasably retain pieces of hole-punched paper.

Paper-retaining devices, such as ring-binder folders or lever-arch type files, have been available for a long time. Such devices are adapted to releasably retain pieces of hole-punched paper in rings of the ring-binders or lever-arch type file mechanisms, and to allow such paper to be retrieved therefrom.

With the advent of technology, various other forms of data carriers have been made available, such as compact discs (CD's), flash cards, and universal serial bus (USB) memories. These machine-readable memory devices may be stored with data in digital form for subsequent retrieval, reading, manipulation and storing by a data processing apparatus, such as computers, laptops, personal digital assistants (PDA's) and the like.

Despite the growth and development of such electronic memory devices capable of storing documents (which may contain texts, graphs, tables, graphics, presentation slides, or a combination of these) in various electronic formats, people still would like to maintain hard copies of the relevant documents, i.e. in paper form. A major problem then arises in that one sometimes finds it hard to match the hard copies of the documents with the machine-readable memory devices storing the same documents.

It is thus an object of the present invention to provide a paper-retaining device in which the aforesaid shortcoming is mitigated, or at least to provide a useful alternative to the trade and public.

According to the present invention, there is provided a paper-retaining device including a substrate, and means fixedly engaged with said substrate for retaining at least a piece of paper, characterized in that at least a first machine-readable memory device is fixedly engaged with said substrate.

Embodiments of the present invention will now be described, by way of examples only, with reference to the accompanying drawings, in which:
Fig. 1A is a front view of a lever-arch type file according to a first embodiment of the present invention, in a closed configuration;
Fig. 1B is a top view of the file shown in Fig. 1A;
Fig. 1C is a left side view of the file shown in Fig. 1B;
Fig. 1D is a right side view of the file shown in Fig. 1B;
Fig. 2 is a top perspective view of the file shown in Fig. 1A;
Fig. 3 is a further perspective view of the file shown in Fig. 1A, with the internal parts shown in dotted lines;
Fig. 4 is an exploded perspective view of the file shown in Fig. 1A, in a partly-open configuration;
Fig. 5 is an assembled view of the file shown in Fig. 4;
Fig. 6 is a top view of the file shown in Fig. 1A, in a fully-open configuration;
Fig. 7 is a right side view of the file shown in Fig. 6;
Fig. 8 is a front view of the file shown in Fig. 6;
Fig. 9A is a top view of a lever-arch type file according to a second embodiment of the present invention, in a closed configuration;
Fig. 9B is a left side view of the file shown in Fig. 9A;
Fig. 9C is a right side view of the file shown in Fig. 9A;
Fig. 9D is an enlarged front view of the file shown in Fig. 9A;
Fig. 10 is a top perspective view of the file shown in Fig. 9A;
Fig. 11 is a further perspective view of the file shown in Fig. 9A, with the internal parts shown in dotted lines;
Fig. 12 is an exploded perspective view of the file shown in Fig. 9A, in a partly-open configuration;
Fig. 13 is a partly-assembled view of the file shown in Fig. 12;
Fig. 14 is a fully-assembled view of the file shown in Fig. 12;
Fig. 15 is a top view of the file shown in Fig. 9A, in a fully-open configuration;
Fig. 16 is a right side view of the file shown in Fig. 15;
Fig. 17A is a bottom view of a lever-arch type file according to a third embodiment of the present invention, in a fully-opened configuration;
Fig. 17B is a side view of the file shown in Fig. 17A;
Fig. 17C is a sectional view taken along the line A-A in Fig. 17A;
Fig. 17D is an enlarged view of the part marked "C" in Fig. 17C;
Fig. 17E is a sectional view taken along the line B-B in Fig. 17A; and
Fig. 17F is an enlarged view of the part marked "D" in Fig. 17E.

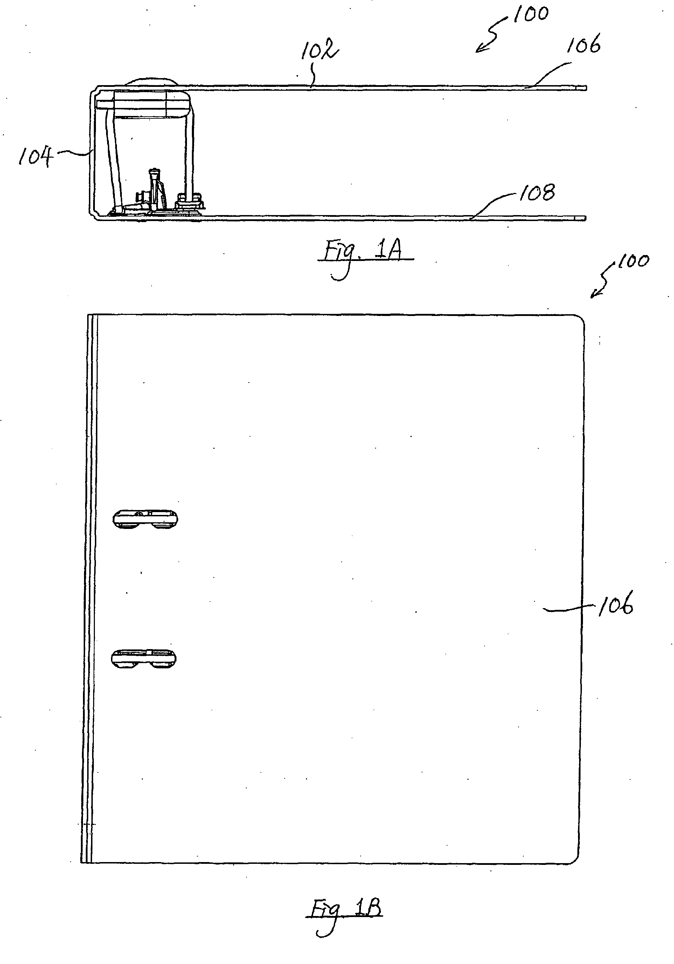

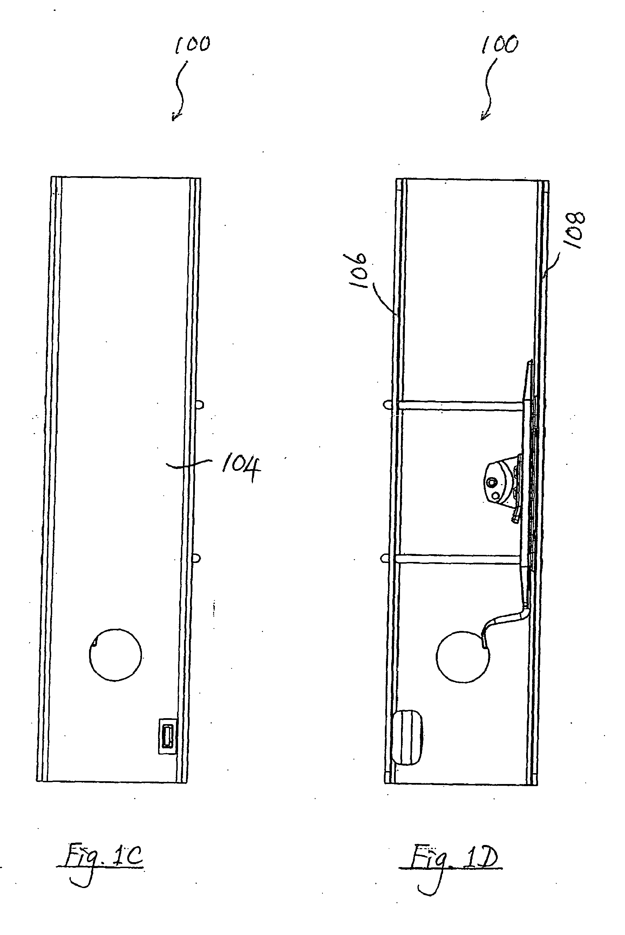

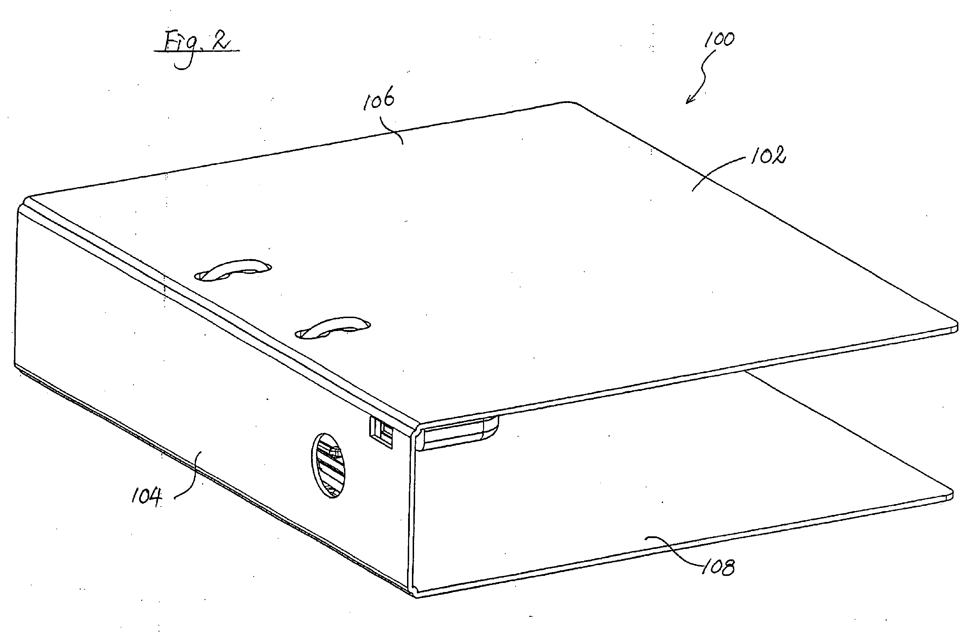

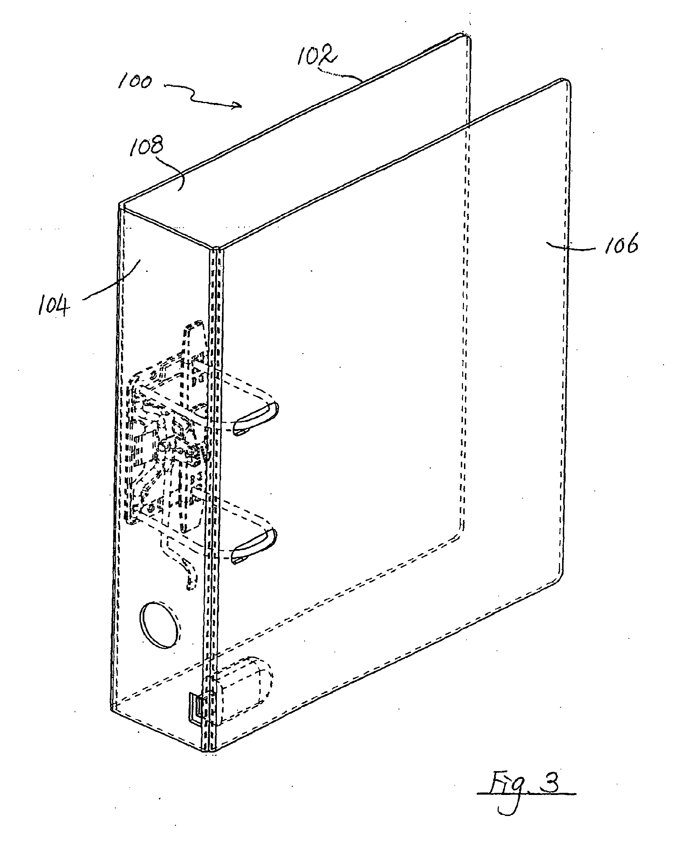

Figs. 1A to 3 show various views of a paper-retaining device according to a first embodiment of the present invention, generally designated as 100. This paper-retaining device 100 is a lever-arch type file with a substrate 102, which may be made of cardboard or plastics, having a spine 104 pivotably engaged with a front cover 106 and a back cover 108, whereby the front cover 106 and back cover 108 are pivotaly movable relative to the spine 104.

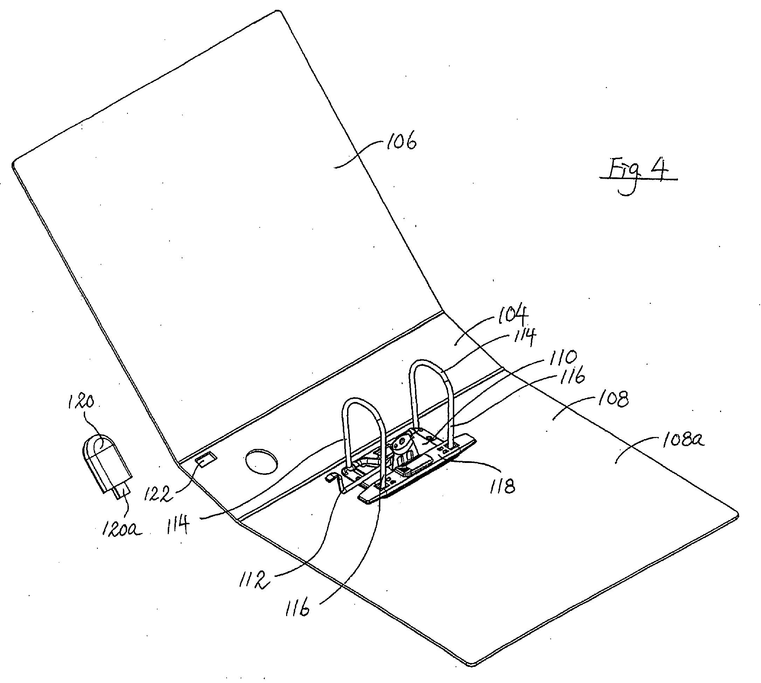

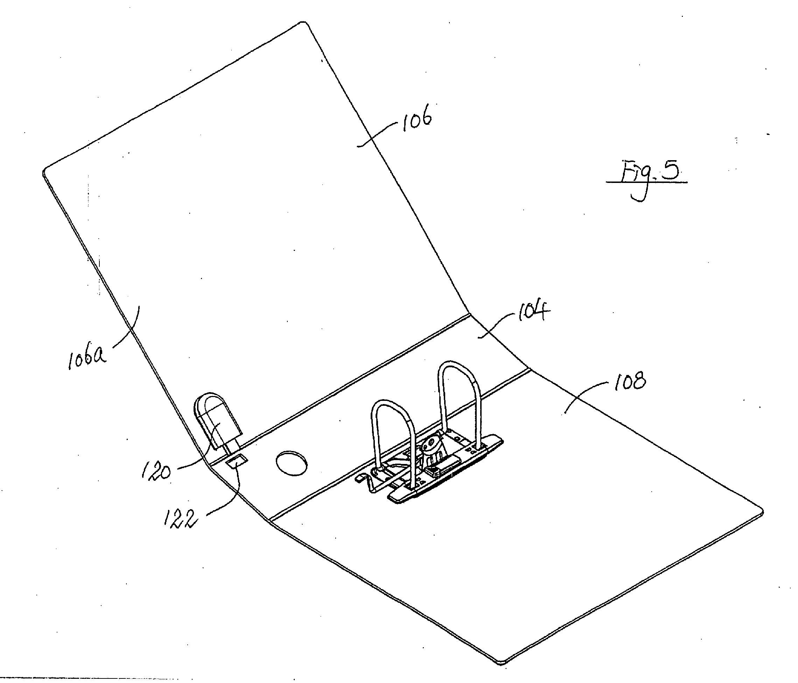

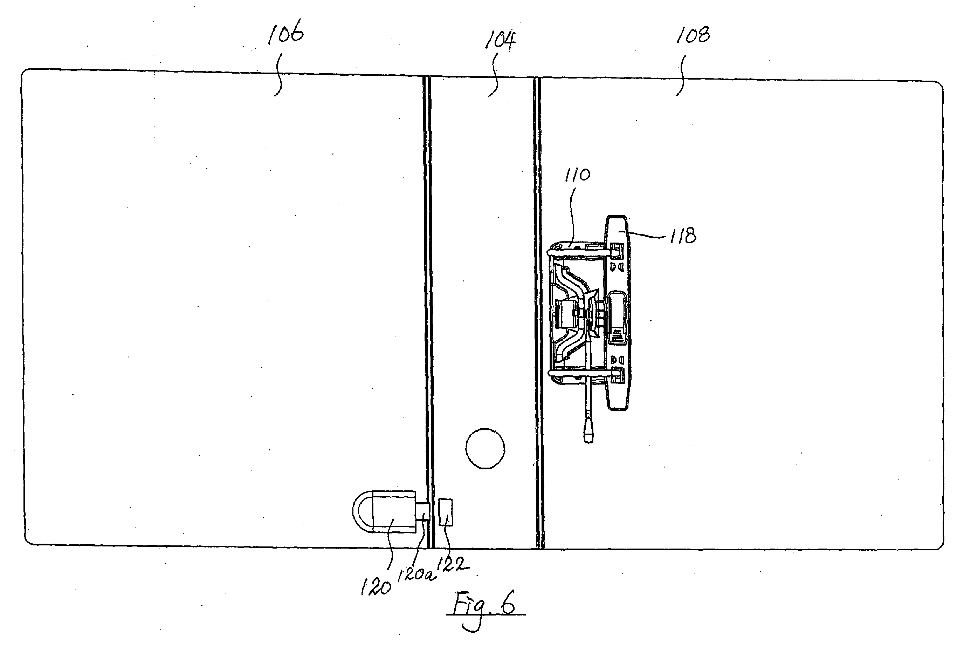

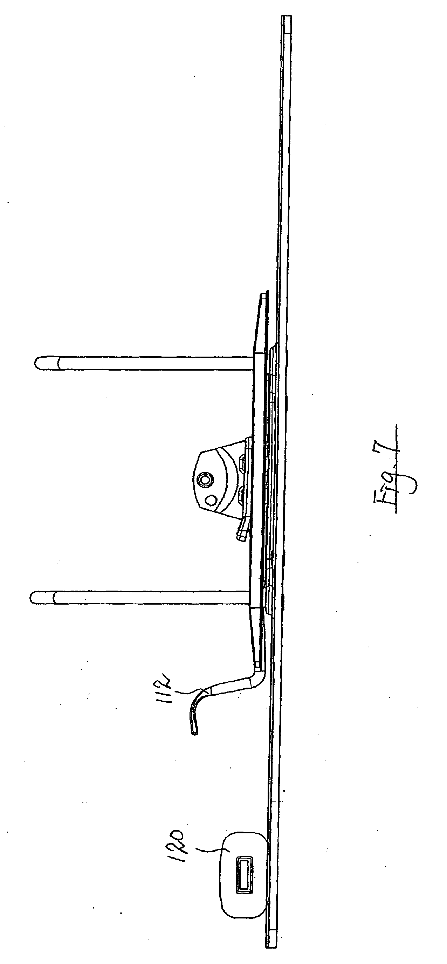

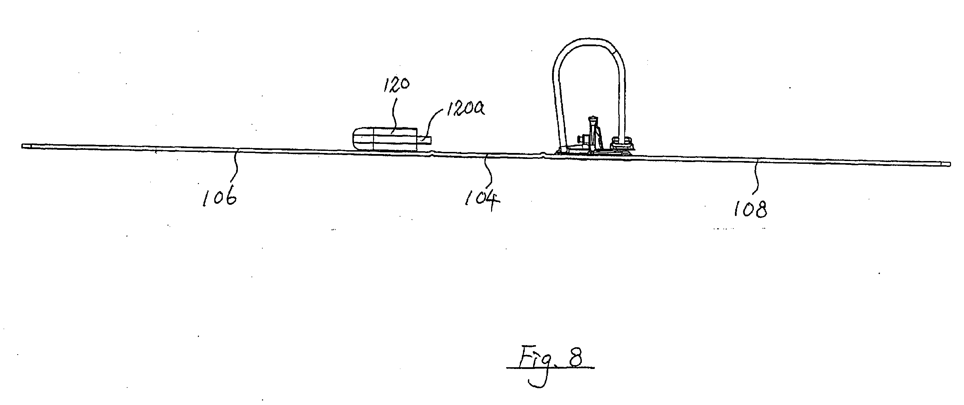

As shown more clearly in Figs. 4 to 8, a lever-arch type file mechanism 110 is fixedly secured, e.g. by rivets or screws, to an inner surface 108a of the back cover 108. A lever 112 of the file mechanism 110 is operable to pivot a pair of arches 114 relative to a pair of posts 116 to selectively open and close a pair of rings formed by the arches 114 and posts 116, to allow pieces of hole-punched paper (not shown) to be retained by, inserted into, or retrieved from the rings formed by the arches 114 and posts 116. A compressor bar 118 is also provided to better secure the paper to the paper-retaining device 100, in the conventional manner.

A machine-readable memory device in the form of a universal serial bus (USB) flash drive 120 is secured to an inner surface 106a of the front cover 106, e.g. by an adhesive, with a plug 120a of the USB memory device 120 facing a generally rectangular opening 122 formed adjacent a lower end of the spine 104.

As can be seen in Figs. 1C, 2 and 3, when the paper-retaining device 100 is in the closed configuration, the plug 120a of the USB flash drive 120 is exposed to the outside environment. In particular, when the paper-retaining device 100 is in the closed configuration, the plug 120a of the USB flash drive 120 is accessible through the opening 122, e.g. *via* a USB receptacle of an extension cord, for establishing data communication with an outside apparatus, e.g. a personal computer (PC), laptop computer, or personal digital assistant (PDA), for retrieval, reading and manipulation of the data stored in the USB flash drive 120, or for storing data into the USB flash drive 120.

A cap (not shown) may be provided for releasably covering the plug 120a of the USB flash drive 120, to reduce the risk of physical damage and damage due to static electricity.

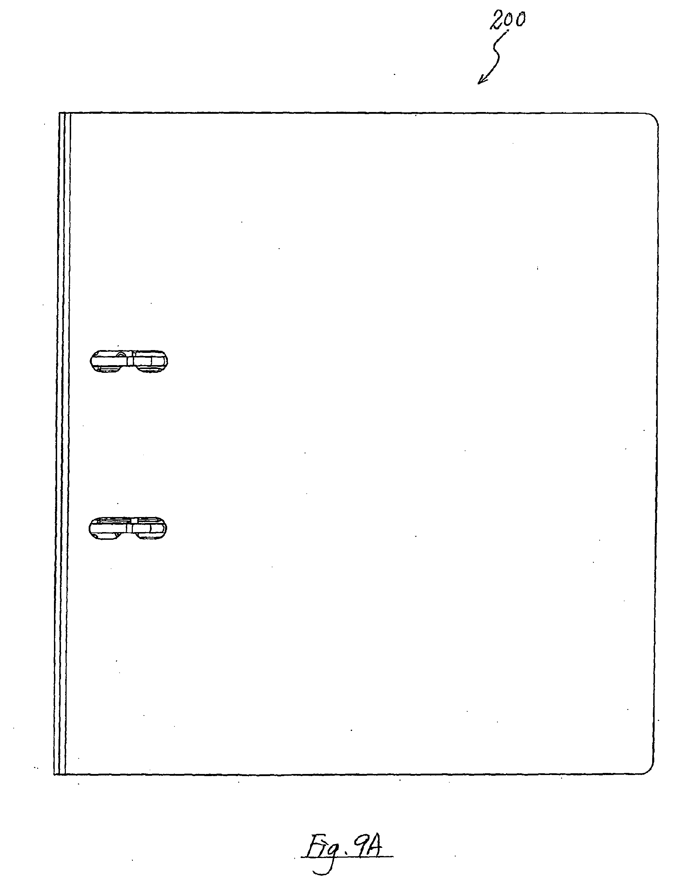

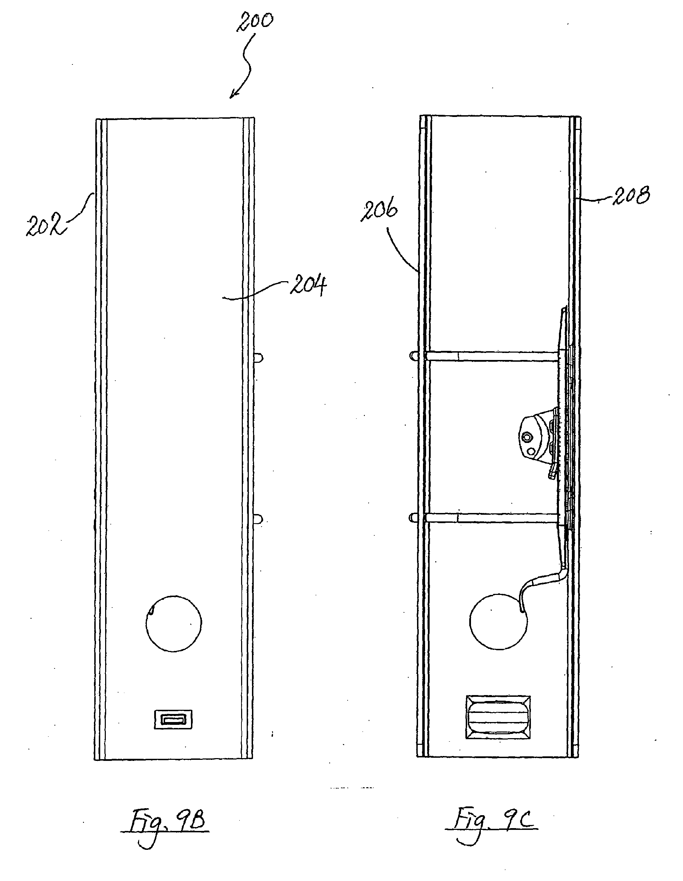

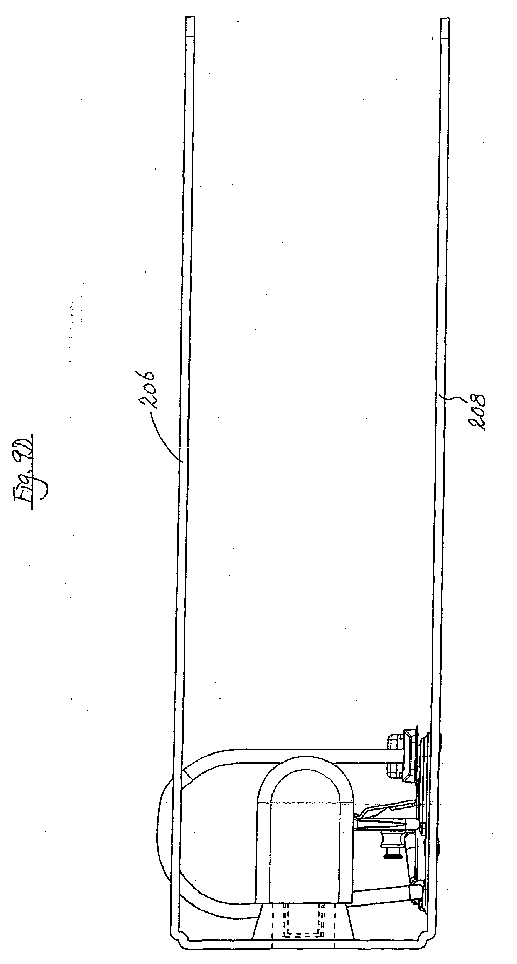

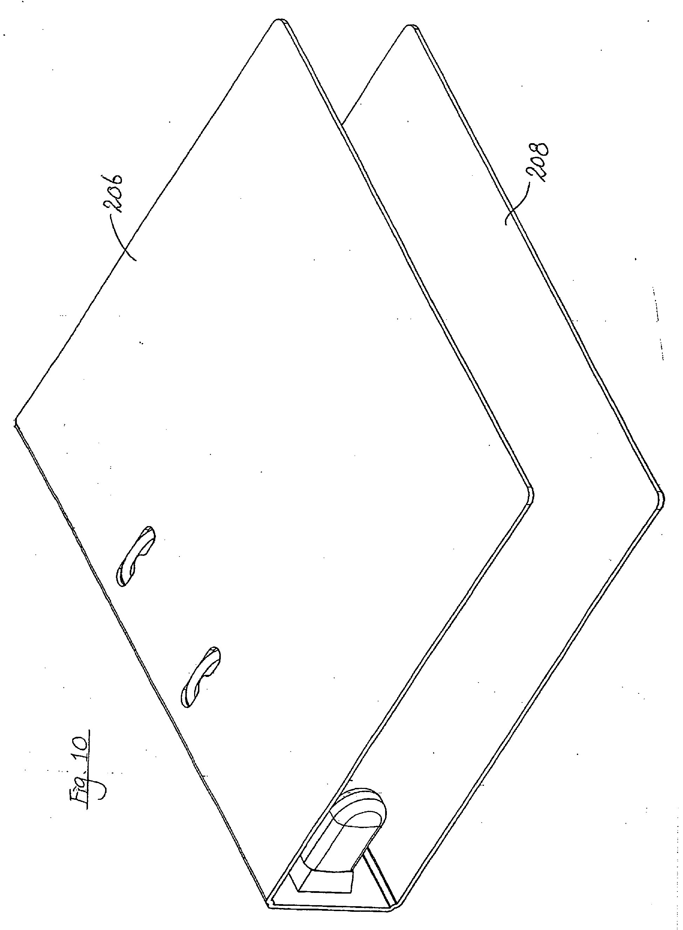

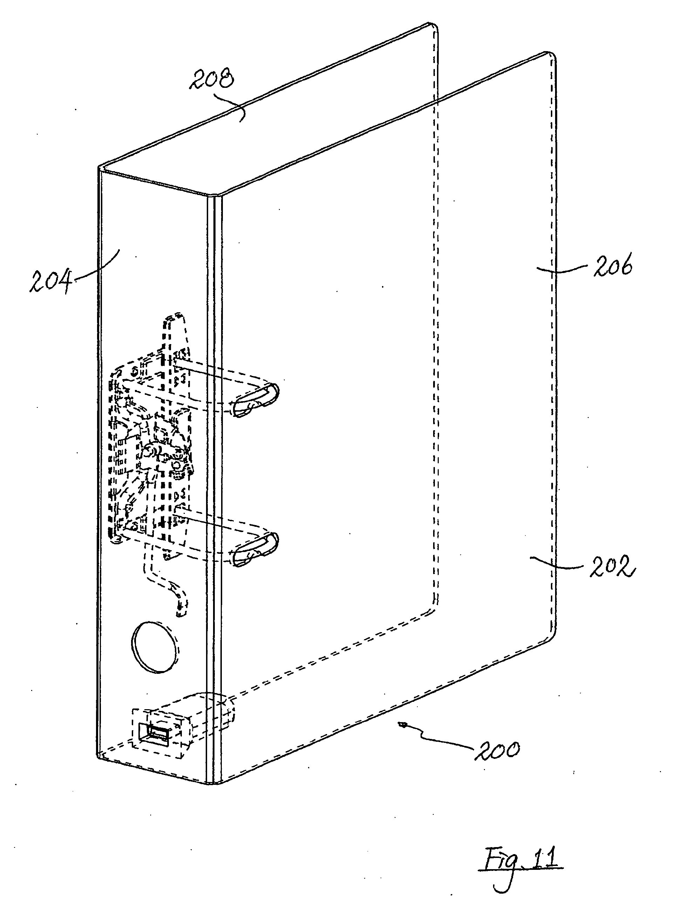

Figs. 9A to 11 show various views of a paper-retaining device according to a second embodiment of the present invention, generally designated as 200. This paper-retaining device 200 is also a lever-arch type file with a cardboard or plastics substrate 202 having a spine 204 pivotably engaged with and movable relative to a front cover 206 and a back cover 208.

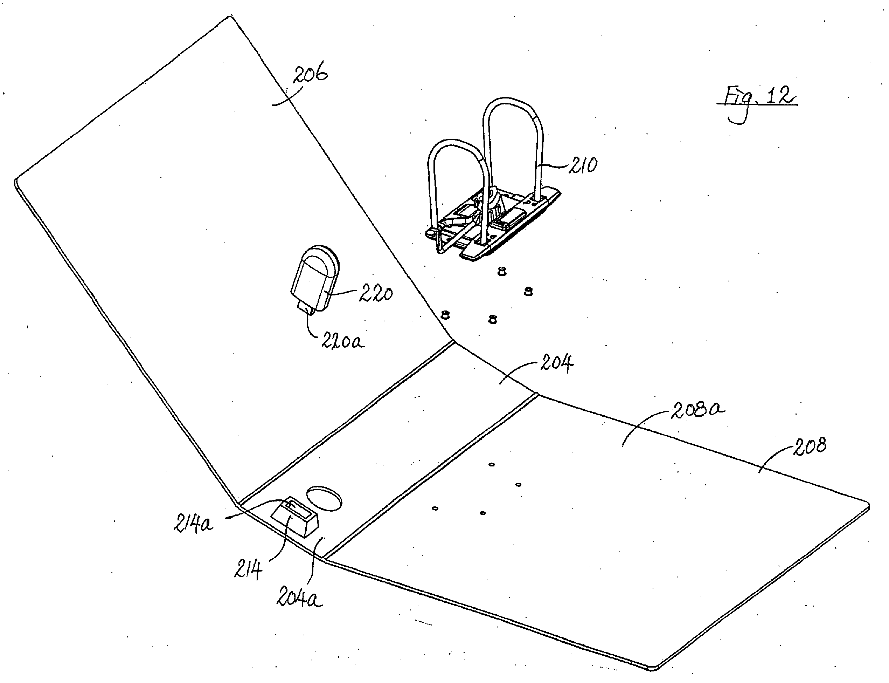

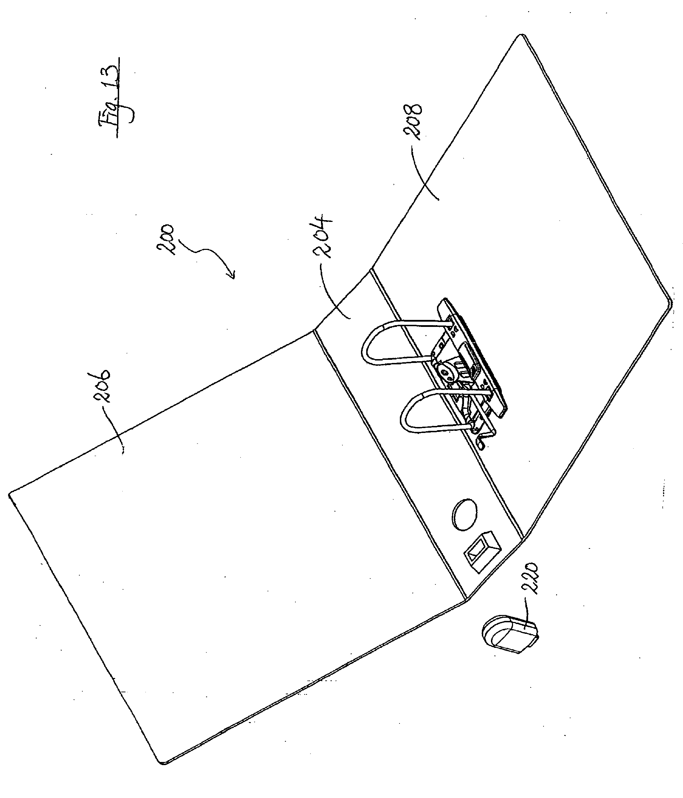

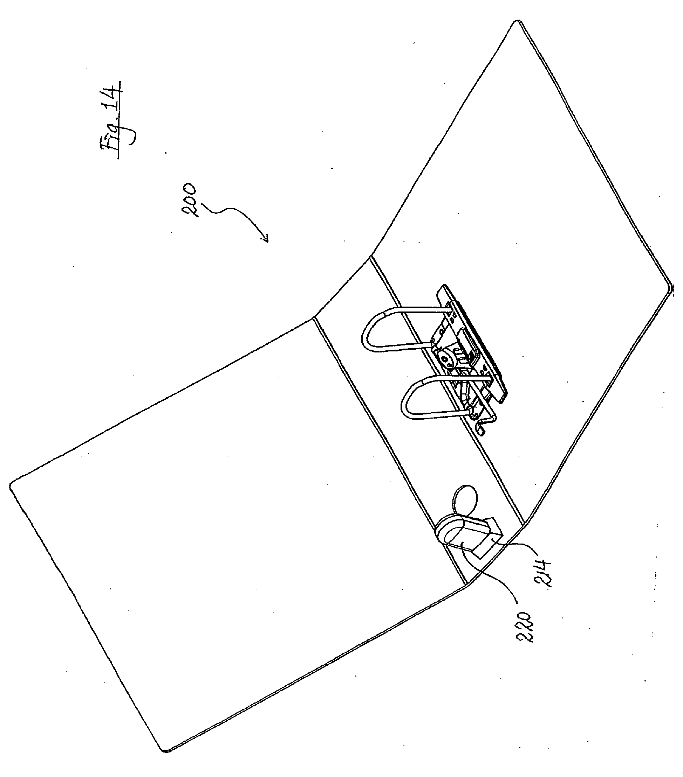

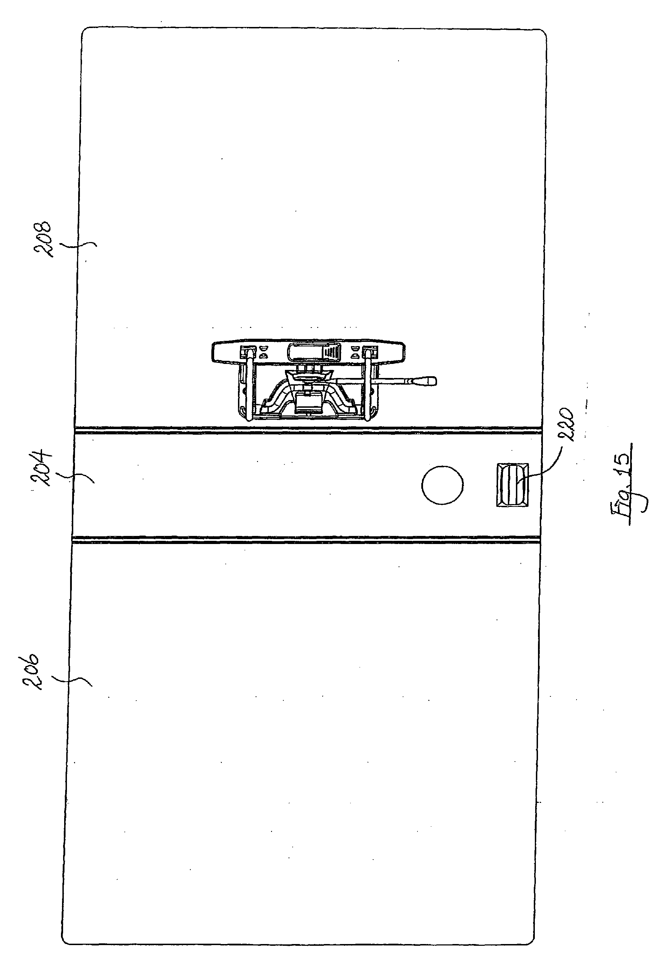

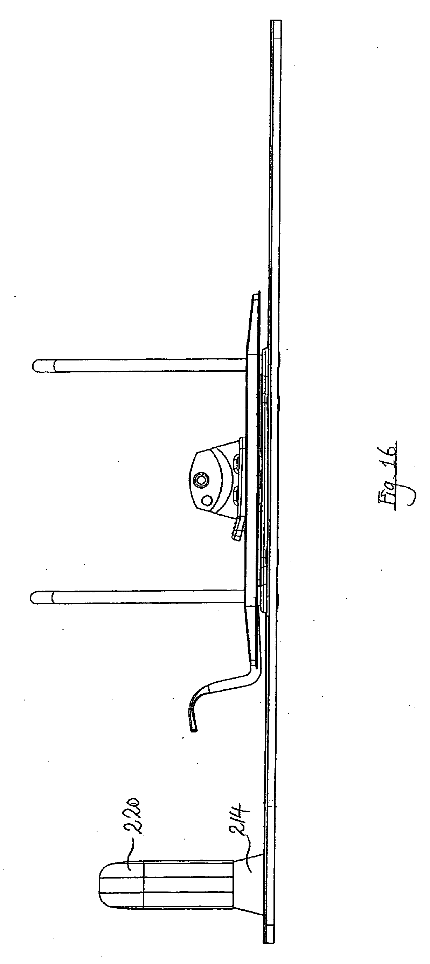

As shown more clearly in Figs. 12 to 16, a lever-arch type file mechanism 210 is fixedly secured, e.g. by rivets or screws, to an inner surface 208a of the back cover 208. A seat 214 is fixed engaged, e.g. by an adhesive, to an inner surface 204a of the spine 204. A USB flash drive 220 is fixedly engaged with the seat 214, by having a plug 220a of the USB flash drive 220 inserted into an opening 214a of the seat 214, while still allowing sufficient space for insertion of a USB receptacle of an extension cord (not shown) to be matingly engaged with the plug 220a of the USB flash drive 220, thus allowing data communication between the USB flash drive 220 with an outside apparatus, e.g. personal computer (PC), laptop computer, or personal digital assistant (PDA), whether the paper-retaining device 200 is open or closed.

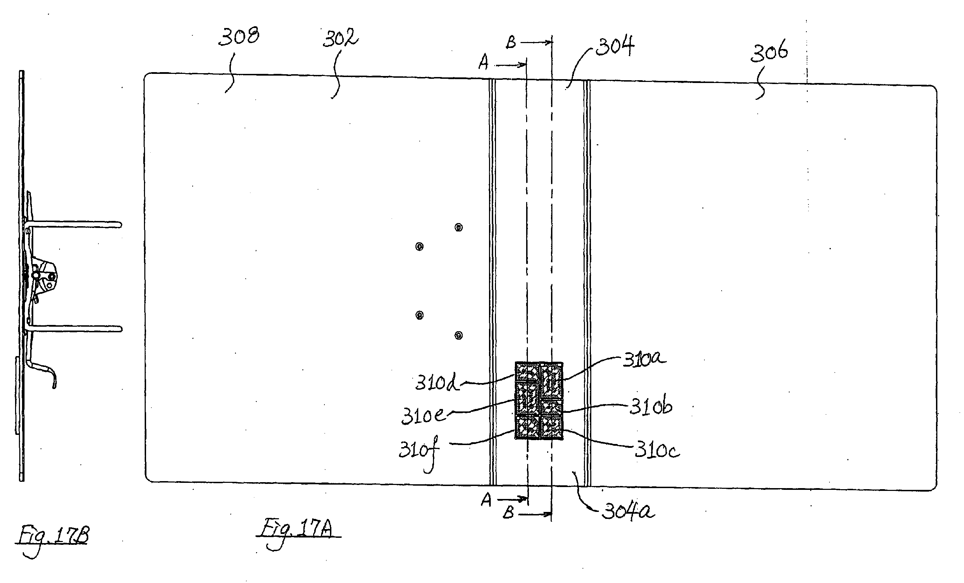

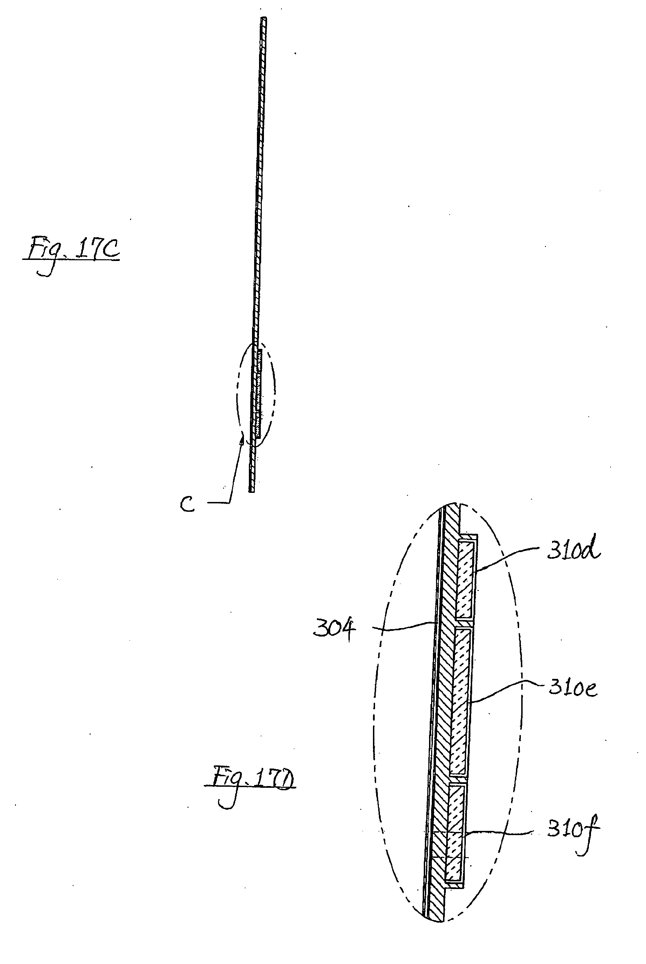

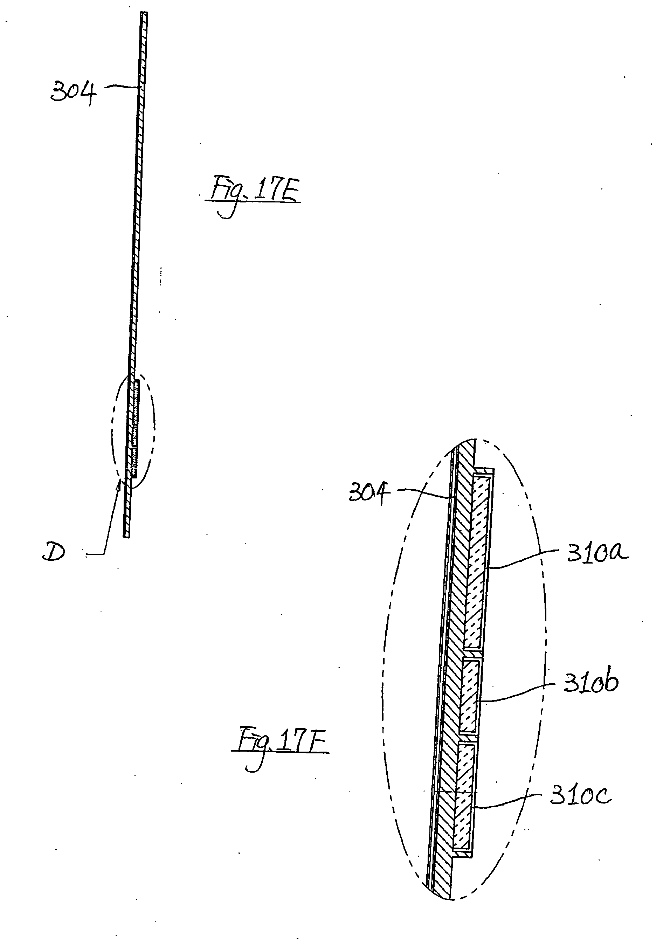

Turning now to Figs. 17A to 17F, various views of a paper-retaining device according to a third embodiment of the present invention are shown and generally designated as 300. This paper-retaining device 300 is also a lever-arch type file with a cardboard or plastics substrate 302 having a spine 304 pivotably engaged with and movable relative to a front cover 306 and a back cover 308.

On an outer surface 304a of the spine 304 are formed six pockets 310a, 310b, 310c, 310d, 310e, 310f, each for releasably receiving a respective memory device, e.g. a memory card. The pockets 310a, 310b, 310c, 310d, 310e, 310f are of different shapes and sizes, so as to contain memory devices of different shapes and sizes.

Although this invention has so far been discussed by reference to lever-arch type files, it should be readily understood by those skilled in the art that the present invention may also be realized in the form of such paper-retaining devices as ring-binder folders, clipboards and the like.

It should be understood that the above only illustrates examples whereby the present invention may be carried out, and that various modifications and/or alterations may be made thereto without departing from the spirit of the invention.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate sub-combinations.

## Claims

1. A paper-retaining device (100, 200, 300) including:
a substrate (102, 202, 302), and
means (110, 210) fixedly engaged with said substrate for retaining at least a piece of paper,
**characterized in that** at least a first machine-readable memory device (120, 220) is fixedly engaged with said substrate.

2. A paper-retaining device according to Claim 1 further **characterized in that** said retaining means is adapted to releasably retain said at least a piece of paper.

3. A paper-retaining device according to Claim 1 or 2 further **characterized in that** said retaining means comprises a lever-arch type file mechanism (110, 210).

4. A paper-retaining device according to Claim 1 or 2 further **characterized in that** said retaining means comprises a ring binder.

5. A paper-retaining device according to any of the preceding claims further **characterized in that** said substrate comprises a spine portion (104, 204, 304) and two cover members (106, 108, 206, 208, 306, 308) pivotably movable relative thereto.

6. A paper-retaining device according to Claim 5 further **characterized in that** said first machine-readable memory device is fixedly attached to said spine portion of said substrate.

7. A paper-retaining device according to Claim 5 further **characterized in that** said first machine-readable memory device is fixedly attached to one of said cover members.

8. A paper-retaining device according to Claim 5, 6 or 7 further **characterized in that** said spine portion includes an opening (122, 214a) allowing a connecting portion (120a, 220a) of said first machine-readable memory device to be exposed to the outside environment.

9. A paper-retaining device according to any of the preceding claims further **characterized in that** said first machine-readable memory device is a universal serial bus (USB) flash drive (120, 220).

10. A paper-retaining device according to any of the preceding claims further **characterized in** including means (310a, 310b, 310c, 310d, 310e, 310f) for releasably holding at least a second machine-readable memory device.

11. A paper-retaining device according to Claim 10 further **characterized in that** said means includes a plurality of pockets (310a, 310b, 310c, 310d, 310e, 310f) each for releasably holding a second machine-readable memory device.

12. A paper-retaining device according to Claim 10 or 11 further **characterized in that** said second machine-readable memory device is a memory card.
